# EUROPEAN PATENT SPECIFICATION

(11) **EP 3 163 097 B1**
(45) Date of publication and mention of the grant of the patent: **21.02.2018**
(21) Application number: 15199441.5
(22) Date of filing: 10.12.2015
(51) Int. Cl.: F16B 25/00, F16B 25/10

(54) **FASTENER**
BEFESTIGUNGSMITTEL
PIÈCE DE FIXATION

(43) Date of publication of application: 03.05.2017
(73) Proprietor: Taiwan Shan Yin International Co., Ltd., Kaohsiung City 806 (TW)
(72) Inventor: Su, Kou-Tsair, 806 Kaohsiung City (TW); Su, Yu-Jung, 806 Kaohsiung City (TW)
(74) Representative: Cabinet Chaillot

(56) References cited:
- EP-A1- 0 930 438
- EP-A1- 2 386 769
- EP-A1- 2 687 735
- AU-B2- 616 466
- DE-A1-102007 023 735
- DE-A1-102010 028 344
- US-A- 4 652 194
- US-A1- 2015 052 735

## Description

### BACKGROUND OF THE INVENTION

### 1. Field of the Invention

This invention relates to a fastener and relates particularly to a fastener providing the tensile force and attaining an anti-loosening effect.

### 2. Description of the Related Art

Referring to Fig**.1** to Fig. **3****,** a U.S. Patent Application Publication No. 2005/0186048 discloses a thread-forming screw fastener **1** which comprises a shank **11,** a head **12** disposed on the shank **11,** a drilling portion **13** disposed on the shank **11,** opposite to the head **12,** and a plurality of threads **14** spirally disposed on the shank **11.** Further, each of the threads **14** includes a plurality of connective wave troughs **141** disposed thereon. Each of the threads **14** has an upper surface **142** and a lower surface **143** opposite to the upper surface **142.** The two surfaces **142, 143** converge at a wave crest **145.** The wave crest **145** defines an included angle **144.** Each wave trough **141** defines a trough angle **146.** Accordingly, when the fastener **1** starts to drill, the wave troughs **141** execute a cutting action to cut debris of an object (not shown) to complete the fastening operation.

However, the disclosed fastener **1** still has problems. First, the threads **14** may easily be broken. Generally, the cutting efficiency of the threads **14** depends on the number of the trough angle **146.** For example, if the trough angle **146** is too small, the cut debris provided with the elastic property may not enter the wave troughs **141** efficiently when the threads **14** carry out a speedy drilling action. This renders the wave troughs **141** unable to provide an auxiliary cutting for the threads **14.** On the other hand, if the trough angle **146** is too large, the size of the threads **14** may be reduced to become a thinner structure. Such thinner structure is unable to effectively bear the drilling torque and is easily broken. Second, the drilling torsion cannot be reduced. Generally, the threads **14** are formed on the shank **11** by using a thread-rolling die (not shown). When the threads **14** are rolled and formed, the surface of the shank **11** becomes ragged or uneven. Thus, the shank **11** with the ragged surface may twist too much and may even snap when it cannot bear the drilling stress. Moreover, the drilling efficiency of the fastener **1** is affected by the number of the included angle **144** of each thread **14.** For example, although the smaller included angle **144** provides a better cutting efficiency, the threads **14** are still unable to bear a larger screw-in torque at the time of drilling into a rigid object. Thus, the threads **14** get broken easily, and an uncompleted drilling action is incurred. On the other hand, although the larger included angle **144** provides a better bearing force for the threads **14,** the cutting efficiency of the larger included angle **144** is still worse than the cutting efficiency of the smaller included angle **144** and the uncompleted drilling still occurs . Thus, the fastener **1** still needs to be improved.

EP 2 386 769 A1 discloses a fastener according to the preamble of claim 1.

### SUMMARY OF THE INVENTION

The object of this invention is to provide a fastener capable of resisting the driving torsion and increasing the cutting efficiency in order to attain an anti-loosening effect and achieve a speedy drilling and positioning effect.

The fastener of this invention comprises a shank defining a central axis, a head disposed on one side of the shank, a drilling portion set on the other side of the shank, opposite to the head, and a plurality of first threads and second threads spirally formed on the shank. Each first thread has a first upper surface facing the head and a first lower surface facing the drilling portion. The first upper surface and the first lower surface extend radially from the shank to converge at a first ridge. The second threads are spirally formed on the shank and affixed to the first threads. Each second thread includes a second upper surface facing the head and a second lower surface facing the drilling portion. The second upper surface and the second lower surface extend radially from the shank to converge at a second ridge. Each second thread has a plurality of opening slots defined on the second upper surface and the second lower surface for exposing portions of the first threads through the opening slots. The second ridge defines a line normal to the central axis of the shank. An upper included angle is defined between the second upper surface and the line of the second ridge. A lower included angle is defined between the second lower surface and the line of the second ridge. The upper included angle is smaller than the lower included angle to allow a slope of the second lower surface relative to the shank to be steeper than a slope of the second upper surface relative to the shank. Moreover, the first threads divide the shank into a plurality of shank segments, each of which has a base part and a transition part extending outward from the base part. The transition part is inclined to the base part by 5 to 10 degrees.

According to the aforementioned structure, the first threads firmly support the second threads and reinforce the drilling strength of the second threads . Further, the opening slots of the second threads provide the first threads with an auxiliary cutting action and a debris accommodating room. The transition part which is inclinedly formed to make each shank segment formed like a truncated cone greatly increases the torsional resistance and the tensile force of the fastener during the drilling process and helps attain an anti-loosening effect after the drilling process is completed. Thus, the fastening and positioning effect of the fastener is greatly enhanced.

Preferably, the upper included angle can be set from 0 to 5 degrees and the lower included angle can be set from 35 to 45 degrees.

Preferably, the first ridge has a first included angle, and the second ridge has a second included angle. The first included angle is smaller than the second included angle.

Preferably, a diameter of each of the first threads can be equal to or less than a diameter of each of the second threads.

Preferably, the second threads can be affixed to part or all of the first threads.

### BRIEF DESCRIPTION OF THE DRAWINGS

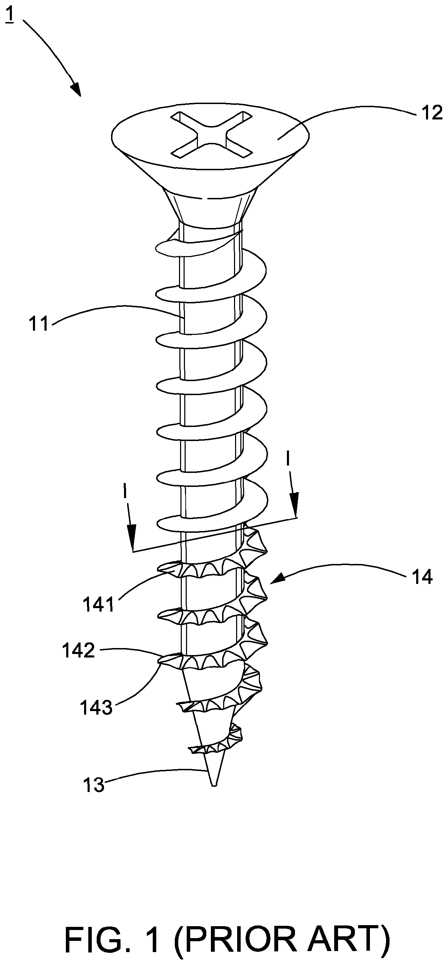

Fig. **1** is a schematic view showing a fastener of the U.S. patent application publication no. 2005/0186048;

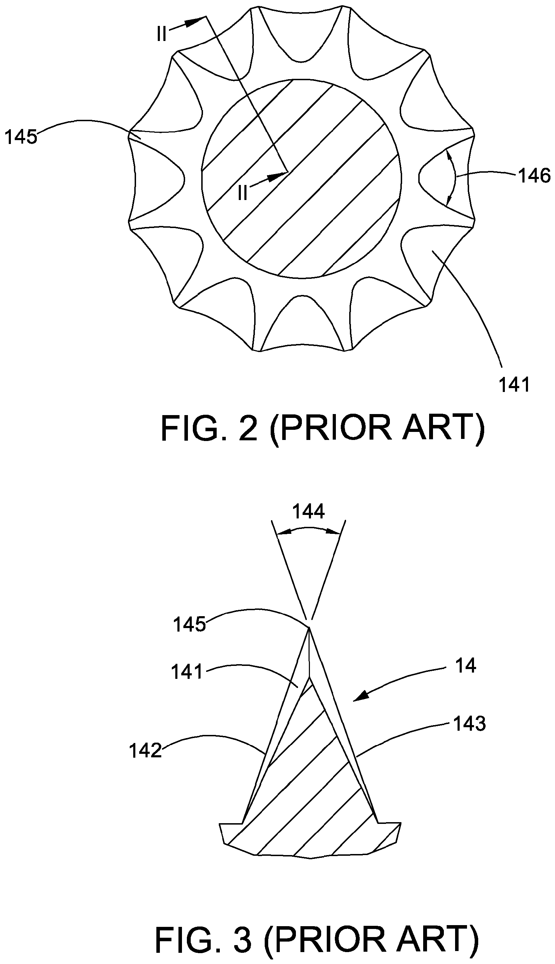

Fig. **2** is a top plan view showing a thread as seen along the line I-I of Fig. 1;
Fig. **3** is a cross-sectional view showing the thread as seen along the line II-II of Fig. 2;
Fig. **4** is a schematic view showing a first preferred embodiment of this invention;
Fig. **4A** is an enlarged view showing a partial element of Fig. 4;
Fig. **5** is a cross-sectional view showing the first preferred embodiment of this invention;
Fig. **5A** is an enlarged view showing a partial element of Fig. 5;
Fig. **6** is a top plan view as seen along the line III-III of Fig. 4;
Fig. **7** is a cross-sectional view showing the first and second threads of this invention as seen along the line IV-IV of Fig. 6 where each of the threads is formed an asymmetrical design;
Fig. **8** is a cross-sectional view showing the second threads affixed to the first threads of this invention where each of the threads is formed a symmetrical design;
Fig. **9** is a schematic view showing another variation of Fig. 4;
Fig. **10** is a schematic view showing another variation of the first preferred embodiment of this invention where the drilling portion is a drilling bit with slots formed thereon;
Fig. **11** is a schematic view showing another variation of Fig. 10; and
Fig. **12** is a top plan view showing another variation of Fig. 6.

### DETAILED DESCRIPTION OF THE PREFERRED EMBODIMENTS

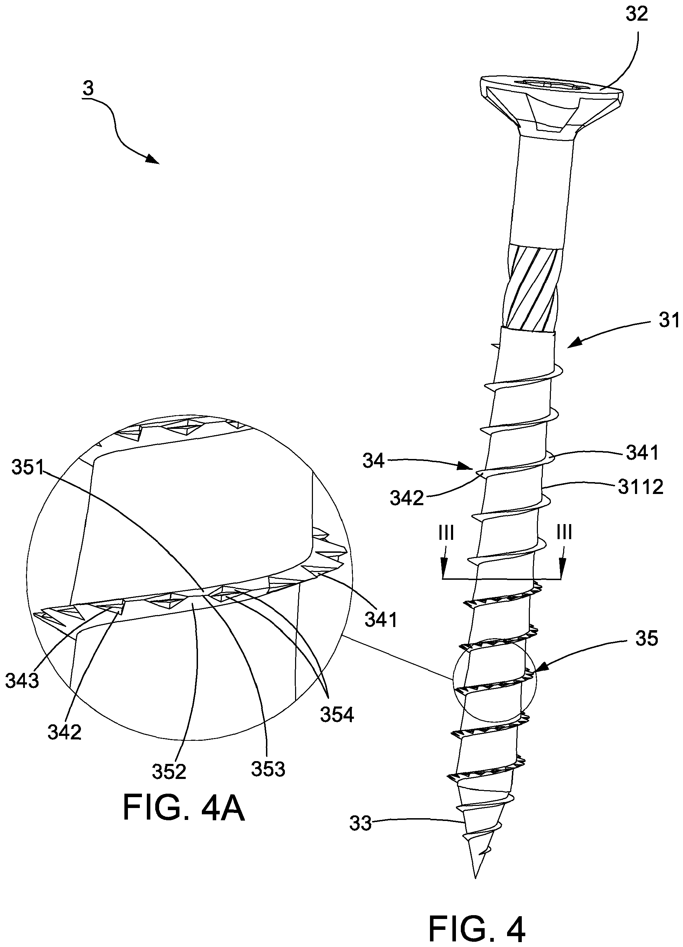

Referring to Figs. **4** to Fig.**5**, a first preferred embodiment of a fastener **3** of this invention is disclosed. The fastener **3** includes a shank **31,** a head **32** connected to the shank **31,** a drilling portion **33** formed on the shank **31,** opposite to the head **32,** and a plurality of first threads **34** and second threads **35** spirally disposed on the shank **31.** Referring to Fig. **4A****,** each first thread **34** extends from the drilling portion **33** toward the head **32** and includes a first upper surface **341** facing the head **32** and a first lower surface **342** facing the drilling portion **33.** The first upper surface **341** and the first lower surface **342** extend radially from the shank **31** to converge at a first ridge **343.**

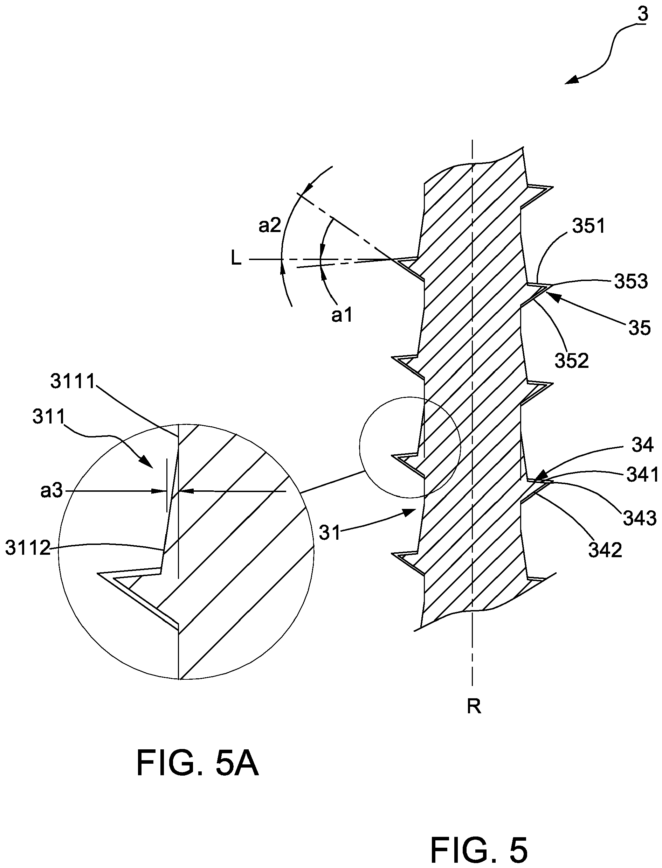

The second threads **35** are spirally formed on the shank **31** and affixed to the first threads **34.** The second threads **35** can be affixed to part of the first threads **34** (shown in Fig.**4**) or affixed to all of the first threads **34** (shown in Fig**.9**). In this embodiment, it is taken as an example that the second threads **35** are affixed to part of the first threads **34.** Also referring to Fig. **4A****,** each second thread **35** has a second upper surface **351** facing the head **32,** a second lower surface **352** facing the drilling portion **33.** The second upper surface **351** and the second lower surface **352** extend radially from the shank **31** to converge at a second ridge **353.** Each second thread **35** further has a plurality of opening slots **354** formed on each second upper surface **351** and each second lower surface **352.** The opening slots **354** expose portions of the first threads **34** therethrough. In other words, the opening slot **354** of each second thread **35** exposes portions of the first upper and lower surface **341, 342,** as illustrated. Referring to Figs. **5** and **5A****,** the first threads **34** divide the shank **31** into a plurality of shank segments **311.** Each shank segment **311** has a base part **3111** and a transition part **3112** following the base part **3111.** The transition part **3112** extend outward from the base part **3111** and is inclined to the base part **3111** by 5 to 10 degrees so that the each of the shank segments **311** is shaped like a truncated cone. Thus, the shank **31** is capable of undertaking the driving torsion or stress which increases incessantly during the drilling process to prevent the shank **31** from twisting too much and breaking.

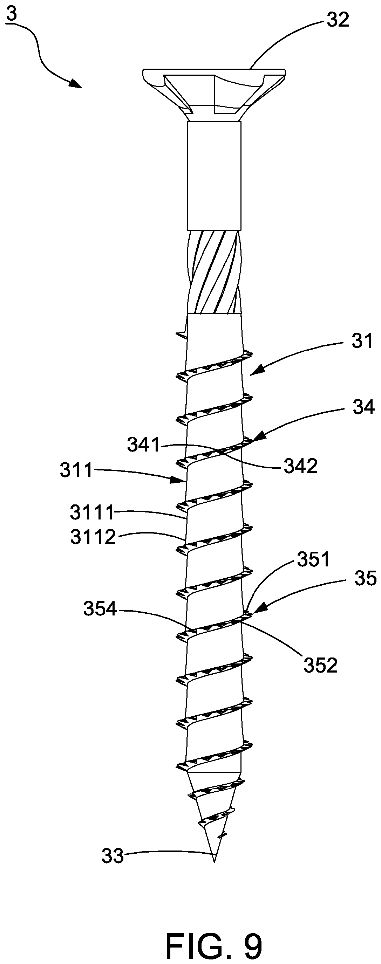

It is also noted that when the second threads **35,** as shown in Fig. **4****,** are affixed to part of the first threads **34,** each transition part **3112** can extend to connect some of the first upper surfaces **341** and some of the second upper surfaces **351.** Alternatively, each transition part **3112** can extend to connect all of the second upper surfaces **351** when the second threads **35,** as shown in Fig. **9****,** are affixed to all of the first threads **34.**

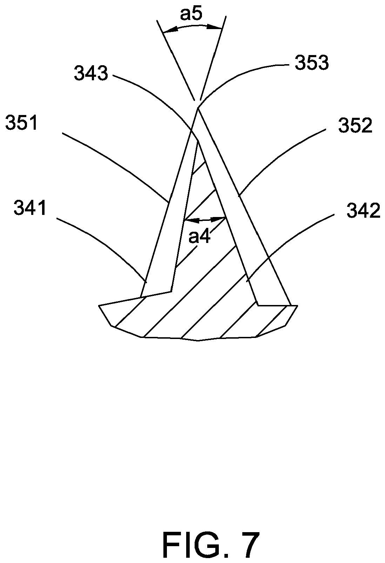

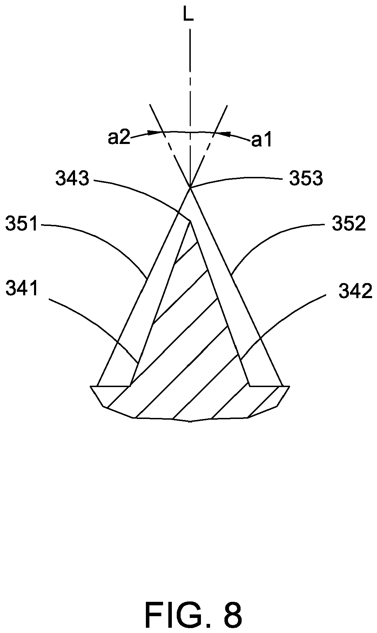

Meanwhile, referring to Fig. **5****,** a line **L** passing through each second ridge **353** is normal to a central axis **R** of the shank **31.** An upper included angle **a1** is defined between the second upper surface **351** and the line **L** of the second ridge **353,** and a lower included angle **a2** is defined between the second lower surface **352** and the line **L** of the second ridge **353.** The upper included angle **a1** is smaller than the lower included angle **a2.** Preferably, the upper included angle **a1** can be set from 0 to 5 degrees and the lower included angle **a2** can be set from 35 to 45 degrees. Thus, the second threads **35** can be formed into an asymmetrical design, as shown in Fig. **7****.** Alternatively, the second threads **35** can be formed into a symmetrical design, of which the upper and lower included angles **a1, a2,** as shown in Fig. **8****,** are the same. The asymmetrical design herein is adopted as an example. In addition, the first ridge **343** defines a first included angle **a4,** and the second ridge **353** defines a second included angle **a5.** The first included angle **a4** is smaller than the second included angle **a5,** as shown in Fig.**7****.**

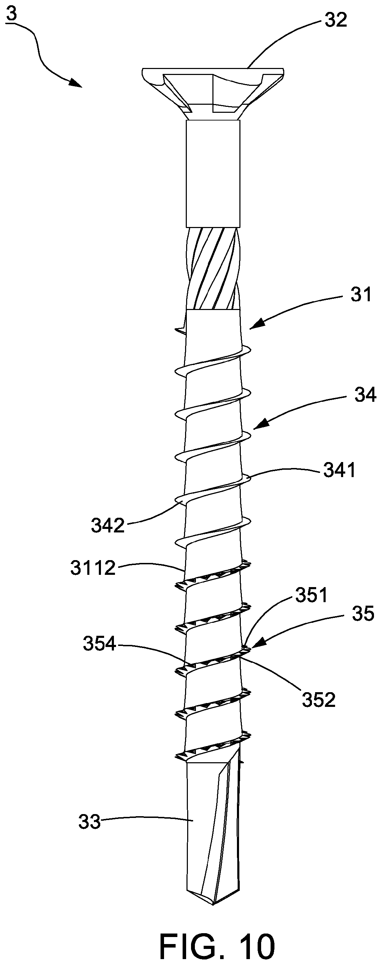

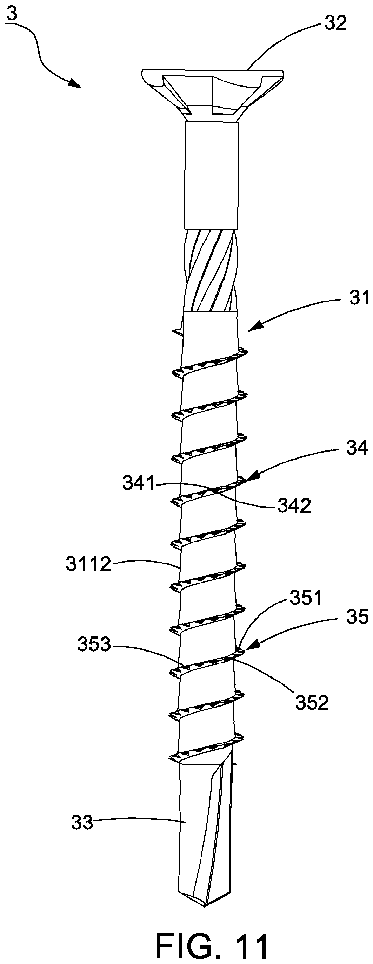

Further, the drilling portion **33** can be, but not limited to, a sharp point shown in Fig.**4** and Fig. **9** or a drilling bit with slots shown in Fig.**10** and Fig. **11** in order to aim at various objects (not shown) for drilling.

The operation of this invention is described with the aid of Figs. **4** to **7****.** To start a drilling operation, the head **32** receives a rotation force from a driving tool (not shown) in order to move the drilling portion **33** into an object (not shown) and synchronously rotates the first threads **34** and the second threads **35** to execute the drilling operation. Thus, the shank **31** is gradually screwed into the object. At the beginning of the drilling operation, the object is cut into debris by the second threads **35.** The arrangement of the opening slots **354** disposed on each second upper surface **351** and each second lower surface **352** cuts the object into debris concurrently to provide an auxiliary cutting effect and also forms a room between the first threads **34** and the second threads **35** to accommodate the debris . Further, because the second threads **35** are affixed to the first threads **34,** the first threads **34** can support the second threads **35** firmly to reinforce the strength and cutting capability of the second threads **35.** When the first included angle **a4** of each first thread **34** is smaller than second included angle **a5** of each second thread **35,** the structure strength and cutting capability of the first threads **34** and the second threads **35** can be promoted.

Furthermore, when the shank **31** keeps drilling into the object, the larger lower included angle **a2** of each second thread **35** which provides each second lower surface **352** with a steeper slope and the existence of the transition parts **3112** inclined to the base parts **3111** of the shank **31** allow the shank **31** to be drilled in a vertical condition. Such condition helps reduce contact points where the second threads **35** come into contact with the object. It is also noted that the inclined transition parts **3112** extending outward from the base parts **3111** of the shank **31** can extend to connect to the first upper surfaces **341** and the second upper surfaces **351,** thereby providing an auxiliary supporting effect for the first and second threads **34, 35.** Thus, the shank **31** can resist and bear the driving torsion or stress which increases incessantly during the drilling operation to prevent the shank **31** from twisting too much and snapping and to prevent the break of the first and second threads **34, 35.** Thus, the fastener **3** has a speedy cutting efficiency and provides a better anti-loosening and positioning effect.

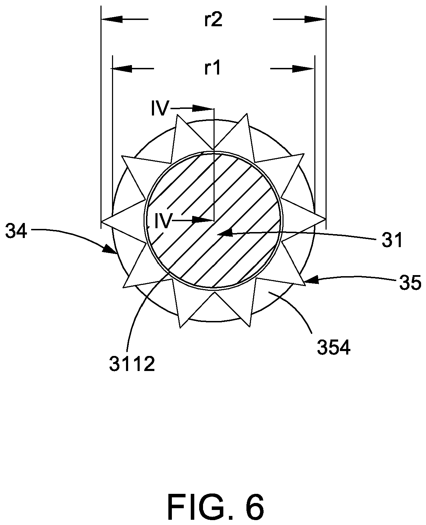

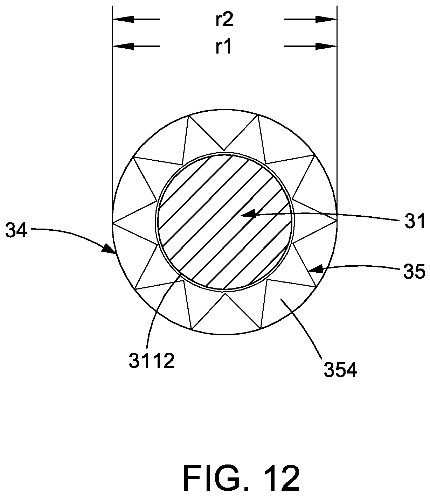

Referring to Fig.**12**, it shows that a diameter **r1** of each first thread **34** is equal to a diameter **r2** of each second thread **35.** Alternatively, the diameter **r1** of each first thread **34** can be less than the diameter **r2** of each second thread **35,** as shown in Fig.**6**. Therefore, the opening slots **354** of the second threads **35** can assist the first and second threads **34, 35** in cutting the object into debris and provide a room sufficient to receive the debris . When the diameter **r1** of each first thread **34** is equal to or less than the diameter **r2** of each second thread **35,** the strength of the second threads **35** against the driving torsion is reinforced by the first threads **34.** Each inclined transition part **3112** of the shank **31,** as shown in Figs. **4****,** **9****,** **10** and **11****,** also provides an auxiliary supporting effect to increase the capability of resisting the driving torsion and the tensile force. Thus, the fastener **3** has a preferable bearing power and an increased drilling strength. Because the debris can be stored in the opening slots **354,** the drilling resistance incurred by the accumulation of too much debris can be reduced to attain a rapid cutting speed and have a firm fastening and position effect.

To sum up, the fastener of this invention takes advantages of the second threads affixed to the first threads to allow the first threads to reinforce the strength of the second threads against the driving torsion. The opening slots of the second threads also provide the first threads with an auxiliary cutting action and a debris accommodating room. In addition, each shank segment shaped like a truncated cone by the inclined transition part relative to the base part offers an auxiliary supporting effect for the first and second threads to increase the capability of resisting the driving torsion and the tensile force and attain an anti-loosening effect after completing the drilling process. Thus, the fastening and positioning effect of the fastener can be greatly increased.

While the embodiments of this invention are shown and described, it is understood that further variations and modifications may be made without departing from the scope of this invention.

## Claims

1. A fastener (3) comprising a shank (31) defining a central axis (R), a head (32) connected to said shank (31), a drilling portion (33) disposed on said shank (31), opposite to said head (32), and a plurality of first threads (34) spirally formed on said shank (31), each of said first threads (34) includes a first upper surface (341) facing said head (32) and a first lower surface (342) facing said drilling portion (33), said first upper surface (341) and said first lower surface (342) extending radially from said shank (31) to converge at a first ridge (343);
wherein a plurality of second threads (35) are spirally formed on said shank (31) and affixed to said first threads (34), each of said second threads (35) including a second upper surface (351) facing said head (32) and a second lower surface (352) facing said drilling portion (33), said second upper surface (351) and said second lower surface (352) extending radially from said shank (31) to converge at a second ridge (353), a plurality of opening slots (354) being defined on each of said second upper surfaces (351) and each of said second lower surfaces (352), said plurality of opening slots (354) exposing portions of said first threads (34) therethrough,
**characterised in that** said second ridge (353) defines a line (L) normal to said central axis (R) of said shank (31), an upper included angle (a1) being defined between said second upper surface (351) and said line (L) of said second ridge (353), a lower included angle (a2) being defined between said second lower surface (352) and said line (L) of said second ridge (353), said upper included angle (a1) being smaller than said lower included angle (a2) to allow a slope of said second lower surface (352) relative to said shank (31) to be steeper than a slope of said second upper surface (351) relative to said shank (31), said plurality of first threads (34) dividing said shank (31) into a plurality of shank segments (311), each of said shank segments (311) having a base part (3111) and a transition part (3112) extending outward from said base part (3111), said transition part (3112) being inclined to said base part (3111) by 5 to 10 degrees.

2. The fastener (3) as claimed in claim 1, wherein said upper included angle (a1) is set from 0 to 5 degrees, and said lower included angle (a2) is set from 35 to 45 degrees.

3. The fastener (3) as claimed in claim 1, wherein said first ridge (343) has a first included angle (a4), said second ridge (353) having a second included angle (a5), said first included angle (a4) being smaller than said second included angle (a5).

4. The fastener (3) as claimed in claim 2, wherein said first ridge (343) has a first included angle (a4), said second ridge (353) having a second included angle (a5), said first included angle (a4) being smaller than said second included angle (a5).

5. The fastener (3) as claimed in claim 1, wherein a diameter (r1) of each of said first threads (34) is equal to a diameter (r2) of each of said second threads (35).

6. The fastener (3) as claimed in claim 4, wherein a diameter (r1) of each of said first threads (34) is equal to a diameter (r2) of each of said second threads (35).

7. The fastener (3) as claimed in claim 1, wherein a diameter (r1) of each of said first threads (34) is less than a diameter (r2) of each of said second threads (35).

8. The fastener (3) as claimed in claim 4, wherein a diameter (r1) of each of said first threads (34) is less than a diameter (r2) of each of said second threads (35).

9. The fastener (3) as claimed in claim 1, wherein said second threads (35) are affixed to part of said first threads (34).

10. The fastener (3) as claimed in claim 1, wherein said second threads (35) are affixed to all of said first threads (34).

## Patentansprüche

1. Befestigungsmittel (3) mit einem Schaft (31), der eine mittlere Achse (R) definiert, einem Kopf (32), der mit besagtem Schaft (31) verbunden ist, einem Bohrteil (33), das auf dem Schaft (31) angeordnet ist, gegenüber dem Kopf (32), und einer Vielzahl von ersten Gewinden (34), die in einer Spirale auf dem Schaft (31) gebildet sind, wobei jedes der ersten Gewinde (34) eine erste obere Oberfläche (341) umfasst, die dem Kopf (32) gegenüberliegt, und eine erste untere Oberfläche (342), die dem Bohrteil (33) gegenüberliegt, wobei die erste obere Oberfläche (341) und die erste untere Oberfläche (342) radial von dem Schaft (31) ausgehen, bis sie bei einer ersten Rippe (343) zusammenlaufen;
wobei eine Vielzahl von zweiten Gewinden (35) in einer Spirale auf dem Schaft (31) gebildet sind und an den ersten Gewinden (34) befestigt sind, wobei jedes der zweiten Gewinde (35) eine zweite obere Oberfläche (351) umfasst, die dem Kopf (32) gegenüberliegt, und eine zweite untere Oberfläche (352), die dem Bohrteil (33) gegenüberliegt, wobei die zweite obere Oberfläche (351) und die zweite untere Oberfläche (352) radial von dem Schaft (31) ausgehen, bis sie bei einer zweiten Rippe (353) zusammenlaufen, wobei eine Vielzahl von Öffnungsschlitzen (354) auf jeder der zweiten oberen Oberflächen (351) und jeder der zweiten unteren Oberflächen (352) definiert sind, so dass durch die Vielzahl von Öffnungsschlitzen (354) Teile der ersten Gewinde (34) sichtbar sind,
**gekennzeichnet dadurch, dass** die zweite Rippe (353) eine Linie (L) definiert, die normal zu der mittleren Achse (R) des Schafts (31) ist, wobei ein oberer eingeschlossener Winkel (a1) zwischen der zweiten oberen Oberfläche (351) und der Linie (L) der zweiten Rippe (353) definiert ist und ein unterer eingeschlossener Winkel (a2) zwischen der zweiten unteren Oberfläche (352) und der Linie (L) der zweiten Rippe (353) definiert ist, besagter oberer eingeschlossener Winkel (a1) ist kleiner als der untere eingeschlossene Winkel (a2), damit eine Schräge der zweiten unteren Oberfläche (352) in Bezug auf den Schaft (31) steiler ist als eine Schräge der zweiten oberen Oberfläche (351) in Bezug auf den Schaft (31), wobei die Vielzahl von ersten Gewinden (34) den Schaft (31) in eine Vielzahl von Schaftsegmenten (311) aufteilt, jedes der Schaftsegmente (311) umfasst ein Basisteil (3111) und ein Übergangsteil (3112), das sich vom Basisteil (3111) aus nach außen erstreckt, wobei das Übergangsteil (3112) zu dem Basisteil (3111) um 5 bis 10 Grad geneigt ist.

2. Befestigungsmittel (3) nach Anspruch 1, wobei der obere eingeschlossene Winkel (a1) von 0 bis 5 Grad reicht und der untere eingeschlossene Winkel (a2) von 35 bis 45 Grad.

3. Befestigungsmittel (3) nach Anspruch 1, wobei die erste Rippe (343) einen ersten eingeschlossenen Winkel (a4) hat, die zweite Rippe (353) einen zweiten eingeschlossenen Winkel (a5) umfasst und besagter erster eingeschlossener Winkel (a4) kleiner ist als der zweite eingeschlossene Winkel (a5).

4. Befestigungsmittel (3) nach Anspruch 2, wobei die erste Rippe (343) einen ersten eingeschlossenen Winkel (a4) hat, die zweite Rippe (353) einen zweiten eingeschlossenen Winkel (a5) umfasst und besagter erster eingeschlossener Winkel (a4) kleiner ist als der zweite eingeschlossene Winkel (a5).

5. Befestigungsmittel (3) nach Anspruch 1, wobei ein Durchmesser (r1) jedes der ersten Gewinde (34) gleich einem Durchmesser (r2) jedes der zweiten Gewinde (35) ist.

6. Befestigungsmittel (3) nach Anspruch 4, wobei ein Durchmesser (r1) jedes der ersten Gewinde (34) gleich einem Durchmesser (r2) jedes der zweiten Gewinde (35) ist.

7. Befestigungsmittel (3) nach Anspruch 1, wobei ein Durchmesser (r1) jedes der ersten Gewinde (34) kleiner als ein Durchmesser (r2) jedes der zweiten Gewinde (35) ist.

8. Befestigungsmittel (3) nach Anspruch 4, wobei ein Durchmesser (r1) jedes der ersten Gewinde (34) kleiner als ein Durchmesser (r2) jedes der zweiten Gewinde (35) ist.

9. Befestigungsmittel (3) nach Anspruch 1, wobei die zweiten Gewinde (35) an einem Teil der ersten Gewinde (34) befestigt sind.

10. Befestigungsmittel (3) nach Anspruch 1, wobei die zweiten Gewinde (35) an allen ersten Gewinden (34) befestigt sind.

## Revendications

1. Pièce de fixation (3) comprenant une tige (31) définissant un axe central (R), une tête (32) reliée à ladite tige (31), une partie de perçage (33) disposée sur ladite tige (31), opposée à ladite tête (32), et une pluralité de premiers filets (34) formés en spirale sur ladite tige (31), chacun desdits premiers filets (34) comprend une première surface supérieure (341) dirigée vers ladite tête (32) et une première surface inférieure (342) dirigée vers ladite partie de perçage (33), ladite première surface supérieure (341) et ladite première surface inférieure (342) s'étendant radialement à partir de ladite tige (31) pour converger au niveau d'une première arête (343) ;
une pluralité de seconds filets (35) étant formés en spirale sur ladite tige (31) et fixés auxdits premiers filets (34), chacun desdits seconds filets (35) comprenant une seconde surface supérieure (351) dirigée vers ladite tête (32) et une seconde surface inférieure (352) dirigée vers ladite partie de perçage (33), ladite seconde surface supérieure (351) et ladite seconde surface inférieure (352) s'étendant radialement à partir de ladite tige (31) pour converger au niveau d'une seconde arête (353), une pluralité de fentes ouvertes (354) étant définies sur chacune desdites secondes surfaces supérieures (351) et chacune desdites secondes surfaces inférieures (352), ladite pluralité de fentes ouvertes (354) exposant des parties desdits premiers filets (34) à travers celles-ci,
**caractérisée par le fait que** ladite seconde arête (353) définit une ligne (L) normale audit axe central (R) de ladite tige (31), un angle inclus supérieur (a1) étant défini entre ladite seconde surface supérieure (351) et ladite ligne (L) de ladite seconde arête (353), un angle inclus inférieur (a2) étant défini entre ladite seconde surface inférieure (352) et ladite ligne (L) de ladite seconde arête (353), ledit angle inclus supérieur (a1) étant plus petit que ledit angle inclus inférieur (a2) pour permettre à une pente de ladite seconde surface inférieure (352) par rapport à ladite tige (31) d'être plus forte qu'une pente de ladite seconde surface supérieure (351) par rapport à ladite tige (31), ladite pluralité de premiers filets (34) divisant ladite tige (31) en une pluralité de segments de tige (311), chacun desdits segments de tige (311) ayant une partie de base (3111) et une partie de transition (3112) s'étendant vers l'extérieur à partir de ladite partie de base (3111), ladite partie de transition (3112) étant inclinée par rapport à ladite partie de base (3111) de 5 à 10 degrés.

2. Pièce de fixation (3) selon la revendication 1, dans laquelle ledit angle inclus supérieur (a1) est défini entre 0 et 5 degrés, et ledit angle inclus inférieur (a2) est défini entre 35 et 45 degrés.

3. Pièce de fixation (3) selon la revendication 1, dans laquelle ladite première arête (343) a un premier angle inclus (a4), ladite seconde arête (353) ayant un second angle inclus (a5), ledit premier angle inclus (a4) étant plus petit que ledit second angle inclus (a5).

4. Pièce de fixation (3) selon la revendication 2, dans laquelle ladite première arête (343) a un premier angle inclus (a4), ladite seconde arête (353) ayant un second angle inclus (a5), ledit premier angle inclus (a4) étant plus petit que ledit second angle inclus (a5).

5. Pièce de fixation (3) selon la revendication 1, dans laquelle un diamètre (r1) de chacun desdits premiers filets (34) est égal à un diamètre (r2) de chacun desdits seconds filets (35).

6. Pièce de fixation (3) selon la revendication 4, dans laquelle un diamètre (r1) de chacun desdits premiers filets (34) est égal à un diamètre (r2) de chacun desdits seconds filets (35).

7. Pièce de fixation (3) selon la revendication 1, dans laquelle un diamètre (r1) de chacun desdits premiers filets (34) est inférieur à un diamètre (r2) de chacun desdits seconds filets (35).

8. Pièce de fixation (3) selon la revendication 4, dans laquelle un diamètre (r1) de chacun desdits premiers filets (34) est inférieur à un diamètre (r2) de chacun desdits seconds filets (35).

9. Pièce de fixation (3) selon la revendication 1, dans laquelle lesdits seconds filets (35) sont fixés à une partie desdits premiers filets (34).

10. Pièce de fixation (3) selon la revendication 1, dans laquelle lesdits seconds filets (35) sont fixés à tous lesdits premiers filets (34).
